# EUROPÄISCHE PATENTANMELDUNG

(11) **EP 0 658 389 A1**
(43) Veröffentlichungstag der Anmeldung: **21.06.1995**
(21) Anmeldenummer: 94890167.3
(22) Anmeldetag: 11.10.1994
(51) Int. Cl.: B23D 59/00, B23D 59/04

(54) **Gattersäge mit Sägespäne-Abblasvorrichtung welche mit einer Gleitmitteldosiervorrichtung versehen ist**

(30) Priorität: 19.11.1993 AT 2343/93
(71) Anmelder: Wintersteiger Gesellschaft m.b.H., A-4910 Ried (AT)
(72) Erfinder: Sturmair, Erwin, A-4772 Lambrechten 89 (AT)
(74) Vertreter: Hübscher, Heiner, Dipl.-Ing.

(57) **Zusammenfassung**

Es wird eine Gattersäge aus einem auf- und abgehenden Sägegatter (1) mit parallelen Sägeblättern (2) und aus einer Vorschubeinrichtung für das in einer Geradführung gehaltene, blockartige Schnittgut (3) beschrieben, wobei auf der in Vorschubrichtung des Schnittgutes (3) hinteren Seite des Sägegatters (1) eine Blaseinrichtung (10) für einen innerhalb der Schnittfugen (8) als Strömungskanäle unter einem spitzen Winkel (α) gegen den Rücken der Sägeblätter (2) gerichteten Blasluftstrom vorgesehen ist.

Die Blaseinrichtung (10) weist einen an das Schnittgut (3) anschließenden Blaskopf (11) auf der einen dich über die Schnittgutbreite erstreckenden, unter einem spitzen Winkel (α) gegenüber dem Sägegatter (1) geneigten Austrittskanal (12) bildet.

Der Blasluftstrom der Blaseinrichtung (10) ist in Richtung des Arbeitshubes des Sägegatters (1) gegen die Sägeblätter (2) gerichtet.

Die Blaseinrichtung (10) ist an eine Dosiereinrichtung für ein Gleitmittel angeschlossen.

## Beschreibung

Die Erfindung bezieht sich auf eine Gattersäge, bestehend aus einem auf- und abgehenden Sägegatter mit parallelen Sägeblättern und aus einer Vorschubeinrichtung für das in einer Geradführung gehaltene, blockartige Schnittgut.

Parketthölzer werden in handelsüblich vorgegebenen Blockgrößen geliefert, so daß die zum Fertigen der Parkettlamellen eingesetzten Sägevorrichtungen auf diese Blockgröße abgestellt werden müssen. Um die mit Kreissägen verbundenen Nachteile hinsichtlich vergleichsweise großer Schnittfugen zu vermeiden, wurde bereits vorgeschlagen (EP-A-0 512 979), für das Schneiden der Parketthölzer Gattersägen einzusezten, die mit einer besonderen Geradführung für das Schnittgut versehen sind. Damit konnten die Schnittverluste gegenüber Kreissägen erheblich verringert werden. Das Problem der Spanabfuhr aus dem Schnittbereich der einzelnen Sägeblätter der Gattersäge begrenzt jedoch die mögliche Schnitthöhe und die Schnittgeschwindigkeit. Es hat sich nämlich herausgestellt, daß bei größeren Schnitthöhen und höheren Schnittgeschwindigkeiten die anfallenden Sägespäne nicht mehr vollständig aus der Schnittfuge entfernt werden und sich an die Seitenwände der Schnittfugen anlagern, was reibungsbedingt die Temperatur der Sägeblätter rasch bis zur Unzulässigkeit ansteigen läßt. In diesem Zusammenhang ist zu bedenken, daß aufgrund der geringen Lamellendicke die Wärmeabfuhr über das Schnittgut weitgehend unterbunden wird. Als Folge der Sägeblatterwärmung ist mit einem Nachlassen der Spannung der Sägeblätter und demzufolge mit einer ungenauen Schnittführung zu rechnen. Abgesehen davon kann ein Verziehen der Schnittgutlamellen nicht ausgeschlossen werden.

Der Erfindung liegt somit die Aufgabe zugrunde, eine Gattersäge der eingangs geschilderten Art mit einfachen Mitteln so zu verbessern, daß zufolge einer ausreichenden Abfuhr der Sägespäne nicht nur eine hohe Standzeit für die Sägeblätter erzielt, sondern auch eine genaue Schnittführung selbst bei größeren Schnitthöhen und höheren Schnittgeschwindigkeiten sichergestellt werden kann.

Die Erfindung löst die gestellte Aufgabe dadurch, daß auf der in Vorschubrichtung des Schnittgutes hinteren Seite des Sägegatters eine Blaseinrichtung für einen innerhalb der Schnittfugen als Strömungskanäle unter einem spitzen Winkel gegen den Rücken der Sägeblätter gerichteten Blasluftstrom vorgesehen ist.

Durch den unter einem spitzen Winkel gegen den Rücken der Sägeblätter gerichteten Blasluftstrom innerhalb der Schnittfugen, die für diesen Blasluftstrom gesonderte Strömungskanäle bilden, wird in überraschender Weise für eine ausreichende Abfuhr der im Schnittbereich anfallenden Sägespäne gesorgt, obwohl dieser Blasluftstrom nur durch den dünnen, sich durch das Führungsspiel zwischen den Sägeblättern und den Seitenwänden der Schnittfugen ergebenden Spalt vom Rücken der Sägeblätter zu den Sägezähnen durchtreten kann. Der Blasluftstrom innerhalb der Schnittfugen unterstützt aber nicht nur das Abführen der Sägespäne aus dem unmittelbaren Schnittbereich, sondern kühlt auch die Sägeblätter und die sich aufgrund der Schnittführung ergebenden Schnittgutlamellen, so daß die Schnittgeschwindigkeit und die Schnitthöhe gegenüber vergleichbaren bekannten Gattersägen erheblich vergrößert werden können, und zwar bei einer hohen Standzeit der Sägeblätter. Die Blasluftführung innerhalb der Schnittfugen bewirkt außerdem, daß an den Seitenflächen der gesägten Schnittgutlamellen keine Sägespäne haften bleiben, die sonst in einem zusätzlichen Arbeitsgang entfernt werden müßten.

Die Blaseinrichtung könnte in die einzelnen Schnittfugen mündende Blasdüsen aufweisen. Erheblich einfachere Konstruktionsverhältnisse werden allerdings sichergestellt, wenn die Blaseinrichtung mit einem an das Schnittgut anschließenden Blaskopf versehen wird, der einen sich über die Schnittgutbreite erstreckenden, unter einem spitzen Winkel gegenüber dem Sägegatter geneigten Austrittskanal bildet. Die durch die Schnitte gebildeten Lamellen unterteilen in diesem Fall den Austrittskanal für die Blasluft düsenartig, so daß keine gesonderten Blasdüsen erforderlich werden. Die Blasluft wird daher gleichmäßig auf die einzelnen Schnittfugen aufgeteilt, wobei zufolge der Neigung des Austrittskanales gegenüber dem Sägegatter die erforderliche Anströmrichtung der Sägeblätter gewährleistet wird. Diese unter einem spitzen Winkel gegenüber den Sägeblättern verlaufende Anströmrichtung der Blasluft ergibt eine entsprechende Strömungskomponente quer zur Vorschubrichtung des Schnittgutes, was für die Spanabfuhr von erheblicher Bedeutung ist.

Da sich die Sägespäne von den Zähnen der Sägeblätter wegen der Neigung der Zahnflanken in Schnittrichtung einfacher in Richtung des Arbeitshubes der Sägeblätter ablösen lassen, empfiehlt es sich bei nur in einer Richtung schneidenden Gattersägen den Blasluftstrom der Blaseinrichtung in Richtung des Arbeitshubes des Sägeblattes gegen die Sägeblätter zu richten. Dementsprechend ist der Blaskopf der Blaseinrichtung auf der Schnittgutseite vorzusehen, auf der die Sägeblätter beim Leerhub aus den Schnittfugen herausgezogen werden.

Wegen der durch den Blasluftstrom unterstützten Spanabfuhr aus dem Schnittbereich wird die durch die Auf- und Abbewegung des Sägegatters bedingte Gleitreibung zwischen den Sägeblättern und dem hölzernen Schnittgut klein gehalten. Eine zusätzliche Verbesserung hinsichtlich dieser Reibungsverhältnisse kann dadurch erreicht werden, daß die Blaseinrichtung an eine Dosiereinrichtung für ein Gleitmittel angeschlossen wird, das mit Hilfe des Blasluftstromes als Fördermittel in den Eingriffsbereich der Sägeblätter in die Schnittfugen gelangt und für eine vorteilhafte Reibungsverminderung sorgt.

In der Zeichnung ist der Erfindungsgegenstand beispielsweise dargestellt. Es zeigen
- Fig. 1: eine erfindungsgemäße Gattersäge in einem schematischen Längsschnitt und
- Fig. 2: diese Gattersäge in einem Schnitt nach der Linie II-II der Fig. 1.

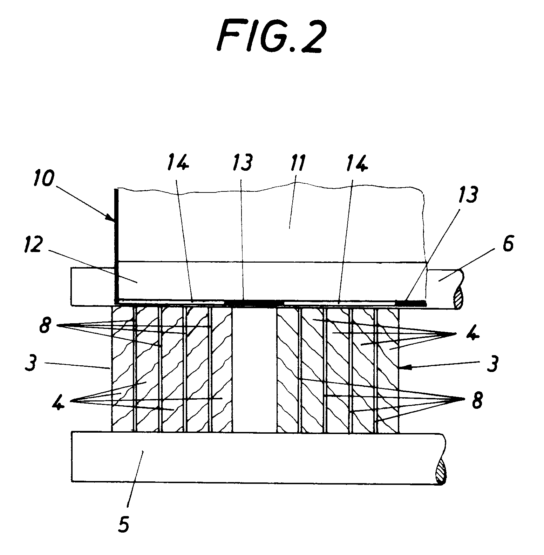

Die dargestellte Gattersäge besteht im wesentlichen aus einem in einem Gestell gelagerten Sägegatter 1 mit einer Mehrzahl von parallelen Sägeblättern 2, das in herkömmlicher Weise auf- und abgehend angetrieben wird. Zur Führung des Schnittgutes 3 ist eine aus Übersichtlichkeitsgründen nicht näher dargestellte Geradführung vorgesehen, die gegenüber den Sägeblättern 2 der Gattersäge so ausgerichtet ist, daß das blockartige Schnittgut 3 in mehrere Lamellen 4 gleichmäßig zersägt wird, wie dies insbesondere der Fig. 2 entnommen werden kann. Der Vorschubantrieb des Schnittgutes 3 erfolgt über Vorschubwalzen 5, denen auf der gegenüberliegenden Schnittgutseite Andrückrollen 6 für das Schnittgut 3 zugeordnet sind.

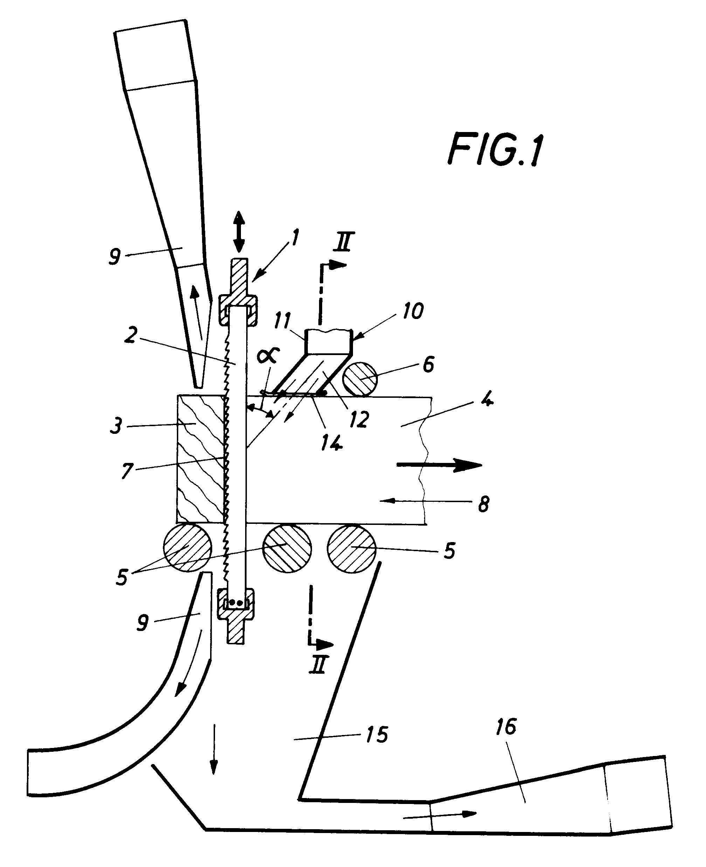

Aufgrund des Schnittgutvorschubes werden durch die auf- und abgehenden Sägeblätter 2 die Lamellen 4 aus dem Schnittgut 3 herausgeschnitten, wobei die anfallenden Sägespäne aus dem Bereich des Grundes 7 der Schnittfugen 8 abgeführt werden müssen. Da die Schwerkraft hiefür nicht ausreicht, selbst wenn Absaugkanäle 9 vorgesehen sind, ist erfindungsgemäß auf der Rückseite des Sägegatters 1 eine Blaseinrichtung 10 vorgesehen, deren beispielsweise mit einem Gebläse verbundener Blaskopf 11 an das Schnittgut 3 anschließt, und zwar über einen sich über die Schnittgutbreite erstreckenden Austrittskanal 12, der mit dem Sägegatter 1 einen spitzen Winkel α einschließt, wie dies der Fig. 1 entnommen werden kann. Sollen mehrere Schnittgutblöcke zugleich zersägt werden, was bei einer entsprechenden Führung der Schnittgutblöcke und einer den Schnittgutblöcken entsprechenden gruppenweisen Zusammenfassung der Sägeblätter im Sägegatter ohne weiteres möglich ist, so kann sich der Austrittskanal 12 über alle Schnittgutblöcke erstrecken. Die seitlichen Zwischenräume zwischen den Schnittgutblöcken werden in diesem Fall zweckmäßig durch dem Austrittskanal 12 zugehörige Abdeckungen 13 verschlossen, um Luftverluste zu vermeiden. Da der Austrittskanal 12 im Bereich der Luftaustrittsöffnungen 14 zwischen den Kanalwänden und den Abdeckungen 13 durch die Lamellen 4 des Schnittgutes mit Ausnahme der sich zwischen den Lamellen erstreckenden Schnittfugen 8 abgedeckt wird, bilden die Schnittfugen 8 für die Blasluft des Blaskopfes 10 Strömungskanäle, die zum Rücken der Sägeblätter 2 führen, so daß über den Blasluftstrom durch die einzelnen Schnittfugen 8 die Späneabfuhr unterstützt wird. Bei einer entsprechenden Gebläseleistung kann somit eine vollständige Späneabfuhr aus dem Schnittbereich der Sägeblätter 2 gewährleistet werden. Da außerdem die Blasluft eine Kühlung der Sägeblätter 2 und der Lamellen 4 bewirkt, ergeben sich insgesamt besonders vorteilhafte Verhältnisse, die hohe Schnittgeschwindigkeiten und große Schnitthöhen erlauben. Aufgrund der Blaseinrichtung 10 wird es ohne weiteres möglich, die Schnitthöhe größer als den Arbeitshub des Sägeblattes 1 zu wählen.

Wie der Fig. 1 entnommen werden kann, ist bei der dargestellten Gattersäge ein abwärts gerichteter Arbeitshub vorgegeben. Die Zähne der Sägeblätter weisen daher eine Neigung nach unten auf, so daß sich auch eine einfache Spanablösung nach unten ergibt. Aufgrund dieses Sachverhaltes ist der Blaskopf 11 auf der Oberseite des Schnittgutes 3 angeordnet, um einen schräg nach unten gegen die Sägeblätter 2 gerichteten Blasluftstrom sicherzustellen. Die aus den Schnittfugen 8 herausgeblasenen Sägespäne werden einerseits über die Absaugkanäle 9 abgesaugt und anderseits in einer Auffangwanne 15 gesammelt, aus der sie über eine Saugleitung 16 abgesaugt werden können.

## Patentansprüche

1. Gattersäge, bestehend aus einem auf- und abgehenden Sägegatter (1) mit parallelen Sägeblättern (2) und aus einer Vorschubeinrichtung für das in einer Geradführung gehaltene, blockartige Schnittgut (3), dadurch gekennzeichnet, daß auf der in Vorschubrichtung des Schnittgutes (3) hinteren Seite des Sägegatters (1) eine Blaseinrichtung (10) für einen innerhalb der Schnittfugen (8) als Strömungskanäle unter einem spitzen Winkel (α) gegen den Rücken der Sägeblätter (2) gerichteten Blasluftstrom vorgesehen ist.

2. Gattersäge nach Anspruch 1, dadurch gekennzeichnet, daß die Blaseinrichtung (10) einen an das Schnittgut (3) anschließenden Blaskopf (11) aufweist, der einen sich über die Schnittgutbreite erstreckenden, unter einem spitzen Winkel (α) gegenüber dem Sägegatter (1) geneigten Austrittskanal (12) bildet.

3. Gattersäge nach Anspruch 1 oder 2, dadurch gekennzeichnet, daß der Blasluftstrom der Blaseinrichtung (10) in Richtung des Arbeitshubes des Sägegatters (1) gegen die Sägeblätter (2) gerichtet ist.

4. Gattersäge nach einem der Ansprüche 1 bis 3, dadurch gekennzeichnet, daß die Blaseinrichtung (10) an eine Dosiereinrichtung für ein Gleitmittel angeschlossen ist.
